# EUROPEAN PATENT APPLICATION

(11) **EP 4 617 339 A1**
(43) Date of publication of application: **17.09.2025**
(21) Application number: 24163548.1
(22) Date of filing: 14.03.2024
(51) Int. Cl.: C09J 133/12

(54) **A THERMALLY DEBONDABLE, NON-REACTIVE HEAT ACTIVATED ADHESIVE COMPOSITION**

(71) Applicant: Henkel AG & Co. KGaA, 40589 Düsseldorf (DE)
(72) Inventor: Franken, Uwe, 41542 Dormagen (DE); Heida, Thomas, 40721 Hilden (DE); Gutsche, Nadine, 40723 Hilden (DE); Bergmann, Sophie, 47805 Krefeld (DE)

(57) **Abstract**

The present invention relates to use of thermally debondable, non-reactive heat activated adhesive composition or thermally settled product according to present invention in a bonded structure, wherein the bonded are for example automotive components.

## Description

### Technical field

The present invention relates to a thermally debondable, non-reactive heat activated adhesive composition which is particularly suitable for use in e-mobility related components.

### Technical background

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature might be effective but can be time consuming and complex to perform: moreover, the aggressive chemicals and/or harsh conditions required can damage the substrates being separated, rendering them unsuitable for subsequent applications.

As an exemplary case, it is evidently desirable to remove, replace and / or recycle components of automotive industry, such as electric car battery cells and casque, which have been attached within the devices using adhesives. However, such adhesives are typically strong in that they are designed to maintain adhesion both during drop or impact events and across a wide range of operating temperatures and other environmental conditions. If care is not taken, adhesive-bonded device components can therefore be damaged or destroyed when removing the components through mechanical processes or the application of chemicals.

Certain authors have sought to develop debondable adhesive compositions wherein the applied heat is used to disrupt the bonding at the interface of the adhesive and the substrate. The problem with the thermal debonding is that if a care is not taken, high temperatures may damage the substrates.

Noting these problems, certain authors have also sought to develop debondable adhesive compositions, wherein the passage of an electrical current through the cured compositions acts to disrupt the bonding at the interface of the adhesive and the substrate.

Therefore, there remains a need in the art to provide means to effectively debond bonded substrates, especially bonded structures in batteries of electronic vehicles and consumer electronics, while maintaining optimum adhesion and mechanical properties of the adhesive.

### Summary of the invention

The present invention relates to a thermally debondable, non-reactive heat activated adhesive composition comprising a) a copolymer of methyl methacrylate and n-butyl methacrylate having a molecular weight from 30000 to 36500 g/mol; b) a hydroxyl group terminated copolyester having a molecular weight from 3250 to 3750g/mol; c) a polypropylene glycol having a molecular weight from 1500 to 2500g/mol, wherein the molecular weight is measured with gel permeation chromatography (GPC) using polystyrene calibration standards, such as is done according to ASTM 3536.

The present invention also relates to a thermally settled thermally debondable, non-reactive heat activated adhesive composition according to the present invention.

The present invention encompasses use of thermally debondable, non-reactive heat activated adhesive composition or thermally settled product according to the present invention in a bonded structure.

The present invention also encompasses a bonded structure comprising: a first substrate; a second substrate; a thermally debondable, non-reactive heat activated adhesive composition layer or thermally settled product layer according to the present invention and an adhesive layer, wherein the thermally debondable, non-reactive heat activated adhesive composition is disposed on a surface of the first substrate and/or on a surface of the second substrate and wherein the adhesive layer is placed on top of the thermally debondable, non-reactive heat activated adhesive composition layer.

The present invention relates to a method of debonding said bonded structure according to the present invention, the method comprising the steps of: i) applying a heat; and, ii) debonding the surfaces.

Short summary of the figures
Figure 1 illustrates formation of a bonded structure and thermal debonding of the bonded structure.
Figure 2 illustrates tensile shear strength between 23°C and 100°C on aluminium results.
Figure 3 illustrates DSC curve of example 1 at 10 K/min.
Figure 4 Illustrates tensile lap shear strength results.
Figure 5 illustrates the battery cell setup applied to evaluate the heat transfer through the layers towards the cell during the debonding process.
Figure 6 Illustrates recorded temperature curves of the different components. Figure 6A illustrates inductive heating of the setup to assess the thermal heat propagation throughout the different layers.
Figure 6B illustrates debonding of the battery cell after 50s heating on a pre-heated steel plate.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps.

As used herein, the term "*consisting of*" excludes any element, ingredient, member or method step not specified.

The words "*preferred*", "*preferably*", "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "*may*" is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

By the term "*heat activated adhesive*" is meant herein an adhesive which require a defined period of time at elevated temperatures to become fully adhesive and to be able to bond with surfaces.

As used herein, room temperature is 23°C plus or minus 2°C.

As used herein, "*ambient conditions*" means the temperature and pressure of the surroundings in which the composition is located or in which a coating layer or the substrate of said coating layer is located.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a thermally debondable, non-reactive heat activated adhesive composition comprising a) a copolymer of methyl methacrylate and n-butyl methacrylate having a molecular weight from 30000 to 36500 g/mol; b) a hydroxyl group terminated copolyester having a molecular weight from 3250 to 3750g/mol; c) a polypropylene glycol having a molecular weight from 1500 to 2500g/mol, wherein the molecular weight is measured with gel permeation chromatography (GPC) using polystyrene calibration standards, such as is done according to ASTM 3536.

The inventors have found out that the heat activated adhesive composition according to the present invention can be thermally debonded without adversely affecting the initial adhesion strength especially adhesion strength on aluminium and duration of the adhesive bond.

The activation temperature of the composition according to the present invention is optimized for battery applications to not influence the battery performance: > 60 °C and < 80/100 °C. While showing good reduction of initial strength after thermal trigger for on-demand disassembly. Low activation temperatures enable a quick debonding action which safeguards that the temperature of the battery itself does not exceed 60 °C.

Furthermore, upon debonding, the melted layer of heat activated adhesive composition according to the present invention can be mechanically removed without damaging surfaces.

A specific combination of a copolymer of methyl methacrylate and n-butyl methacrylate, a hydroxyl group terminated copolyester and a polypropylene glycol, each component having specific molecular weights enables strong initial adhesion strength and duration of the bond while thermally debonding when heat is applied.

The thermally debondable, non-reactive heat activated adhesive composition according to the present invention comprises a copolymer of methyl methacrylate and n-butyl methacrylate.

The copolymer of methyl methacrylate and n-butyl methacrylate is preferred because it provides a good adhesion to a substrate.

The suitable co-polymer of methyl methacrylate and n-butyl methacrylate has a molecular weight from 30000 to 36500 g/mol, preferably a molecular weight about 35000 g/mol, wherein the molecular weight is measured with gel permeation chromatography (GPC) using polystyrene calibration standards, such as is done according to ASTM 3536.

Above molecular weights are preferred as they provide good balance between initial bond strength and wetting to the substrates.

Suitable commercially available copolymer of methyl methacrylate and n-butyl methacrylate for use in the present invention include but is not limited to Dynacoll AC 1620 from Evonik.

The copolymer of methyl methacrylate and n-butyl methacrylate may be present in an amount of from 45 to 55% by weight of the total weight of the composition, preferably from 47 to 53%, more preferably from 48 to 52% and even more preferably the copolymer of methyl methacrylate and n-butyl methacrylate is present in an amount of about 50%.

The above defined quantities are preferred because too high copolymer content may lead to too high viscosity and difficulties in application of thin layers of the composition (layers may even be brittle), whereas too low quantities may lead to poor adhesion properties.

The thermally debondable, non-reactive heat activated adhesive composition according to the present invention comprises hydroxyl group terminated copolyester.

The hydroxyl group terminated copolyester is preferred because it provides increased physical interaction with the aluminium surface for adhesion.

Hydroxyl group terminated copolyesters are formed from the condensation of one or more polyhydric alcohols having from 2 to 15 carbon atoms with one or more polycarboxylic acids having from 2 to 14 carbon atoms.

Examples of suitable polyhydric alcohols include ethylene glycol, propylene glycol such as 1,2-propylene glycol and 1,3-propylene glycol, glycerol, pentaerythritol, trimethylolpropane, 1,4,6-octanetriol, butanediol, pentanediol, hexanediol, dodecanediol, octanediol, chloropentanediol, glycerol monallyl ether, glycerol monoethyl ether, diethylene glycol, 2-ethylhexanediol-1,4, cyclohexanediol-1,4,1,2,6-hexanetriol, 1,3,5-hexanetriol, 1,3-bis-(2-hydroxyethoxy)propane and the like.

Examples of polycarboxylic acids include phthalic acid, isophthalic acid, terephthalic acid, tetrachlorophthalic acid, maleic acid, dodecylmaleic acid, octadecenylmaleic acid, fumaric acid, aconitic acid, trimellitic acid, tricarballylic acid, 3,3'-thiodipropionic acid, succinic acid, adipic acid, suberic acid, azelaic acid, malonic acid, glutaric acid, pimelic acid, sebacic acid, cyclohexane-1,2-dicarboxylic acid, 1,4-cyclohexadiene-1,2-dicarboxylic acid, 3-methyl-3,5-cyclohexadiene-1,2-dicarboxylic acid and the corresponding acid anhydrides, acid chlorides and acid esters such as phthalic anhydride, phthaloyl chloride and the dimethyl ester of phthalic acid. Preferred polycarboxylic acids are the aliphatic and cycloaliphatic dicarboxylic acids containing no more than 14 carbon atoms and the aromatic dicarboxylic acids containing no more than 14 atoms. Dimer fatty acids can also be used-these are well known in the art and refers to the dimerisation product of mono- or polyunsaturated acids and/or esters thereof. Preferred dimer fatty acids are dimers of C10 - to a C30 , more preferably C12 - to a C24 , particularly C14 - to a C22 and especially C18 alkyl chains. Suitable dimer fatty acids include the dimerisation products of oleic acid, linoleic acid, linolenic acid, palmitoleic acid and elaidic acid. The dimerisation products of the unsaturated fatty acid mixtures obtained in the hydrolysis of natural fats and oils, e.g., sunflower oil, soybean oil, olive oil, rapeseed oil, cottonseed oil and tall oil may also be used. In addition to the dimer fatty acids, dimerisation usually results in varying amounts of oligomeric fatty acids (so called "trimer") and residues of monomeric fatty acids (so-called "monomer"), or esters thereof, being present. Suitable dimer fatty acids have a dimer acid content greater than 60%, preferably greater than 75%, more preferably in the range 90 to 99.5%, particularly 95 to 99%, and especially 97 to 99%.

The suitable hydroxyl group terminated copolyester has a has a molecular weight from 3250 to 3750 g/mol, preferably a molecular weight about 3500 g/mol, wherein the molecular weight is measured with gel permeation chromatography (GPC) using polystyrene calibration standards, such as is done according to ASTM 3536.

Above molecular weights are preferred as they provide a sharp melting point in the targeted temperature window.

Suitable commercially available hydroxyl group terminated copolyester for use in the present invention include but is not limited to Dynacoll 7330 from Evonik.

The hydroxyl group terminated copolyester may be present in an amount of from 35 to 45% by weight of the total weight of the composition, preferably from 37 to 43%, more preferably from 38 to 42% and even more preferably the hydroxyl group terminated copolyester is present in an amount of about 40%.

The above defined quantities are preferred because too high hydroxyl group terminated copolyester content may lead to too flexible adhesive layer having a poor adhesion strength, whereas too low quantities may lead to too amorphous film, which may be very brittle.

The thermally debondable, non-reactive heat activated adhesive composition according to the present invention comprises a polypropylene glycol.

The polypropylene glycol is preferred because it provides polyester/polyacrylate miscibility.

The suitable polypropylene glycol has a molecular weight from 1500 to 2500g/mol, preferably a molecular weight about 2000 g/mol, wherein the molecular weight is measured with gel permeation chromatography (GPC) using polystyrene calibration standards, such as is done according to ASTM 3536.

Above molecular weights are preferred as they enable in combination with other components' molecular weights thermal debonding.

Suitable commercially available polypropylene glycol for use in the present invention include but are not limited to Caradol ED56-300 from Shell.

The polypropylene glycol may be present in an amount of from 5 to 15% by weight of the total weight of the composition, preferably from 7 to 13%, more preferably from 8 to 12% and even more preferably the polypropylene glycol is present in an amount of about 10%.

The above defined quantities are preferred because they enable to mix hydroxyl group terminated copolyester and copolymer of methyl methacrylate and n-butyl methacrylate.

Viscosity of the thermally debondable, non-reactive heat activated adhesive composition according to the present invention is preferably less than 10000 mPAS at 130°C, wherein viscosity is measured according to ASTM D 3236.

Melting point of the thermally debondable, non-reactive heat activated adhesive composition according to the present invention is preferably more than 60°C, preferably more than 70°C and more preferably more than 80°C. Preferable the melting point is less than 100°C. The melting point is measured by using Differential Scanning Calorimetry (DSC).

These melting points are preferred because then the adhesive composition may have sufficient strength up to 60°C.

The present invention relates to thermally settled thermally debondable, non-reactive heat activated adhesive composition according to the present invention.

The present invention relates to use of thermally debondable, non-reactive heat activated adhesive composition or thermally settled product according to present invention in a bonded structure.

The present invention relates to a bonded structure comprising: a first substrate; a second substrate; a thermally debondable, non-reactive heat activated adhesive composition layer or thermally settled product layer according to the present invention; and an adhesive layer, wherein the thermally debondable, non-reactive heat activated adhesive composition is disposed on a surface of the first substrate and/or on a surface of the second substrate and wherein the adhesive layer is placed on top of the thermally debondable, non-reactive heat activated adhesive composition layer.

Examples of bonded structures are automotive components such as a battery, a casque and interior parts. Specific, non-limiting examples of e-mobility components are a battery lid, battery cells (cell-to-cell, cell-to-module, cell-to-body), battery modules, inverter, converter, and various structural adhesive applications and various thermally conductive applications.

The first and second substrates can be same or different and not limited to any particular substrate material. However, suitable substrate should have a temperature stability below debonding temperature and melting point above 100°C.

The adhesive layer of the bonded structure according to the present invention may be formed from any kind of adhesive suitable to adhere selected substrates. Suitable adhesive may be one component (1k) composition or a two component (2k) composition.

The adhesive layer of the bonded structure according to the present invention is preferably formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

Suitable commercially available adhesive for use in the present invention include but are not limited to Technomelt EP 5065 and Teroson MS 939 from Henkel AG & Co. KGaA.

The present invention also relates to a method of debonding said bonded structure according to the present invention, the method comprising the steps of: i) applying a heat; and, ii) debonding the surfaces.

The heat source may be a thermal source, a sonication probe or an electromagnetic source.

In the debonding method the temperature applied in step i) is from 60 to 200°C, and it is preferably applied for a duration of from 2 minutes to 60 minutes.

The duration of the required heat application depends on many factors and can be from 5 minutes to 60 minutes or from 10 minutes to 60 minutes or from 15 minutes to 60 minutes or from 20 minutes to 60 minutes.

Upon debonding the melted adhesive according to the present invention can be mechanically removed.

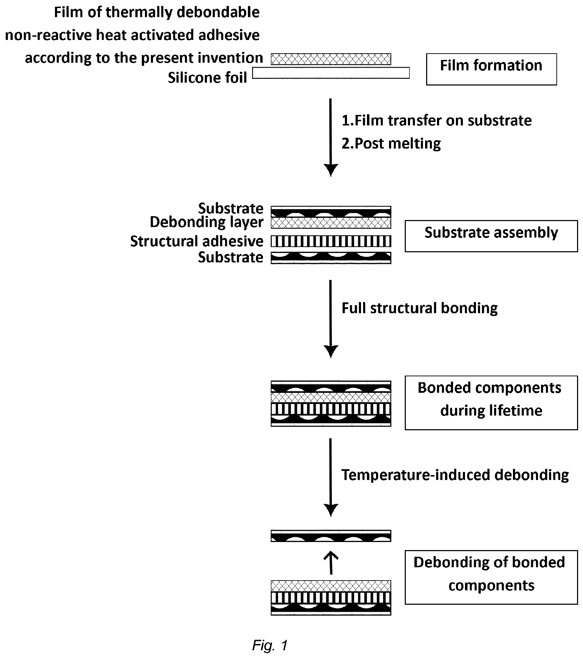

Figure 1 illustrates formation of a bonded structure and thermal debonding of the bonded structure. First film of thermally debondable non-reactive heat activated adhesive according to the present invention is formed onto a silicone foil. The adhesive film is postmelted and applied onto a surface of a first substrate to form a debonding layer (by the term postmelting is meant herein that the substrate is heated above the melting point of the hotmelt to provide full and homogeneous covering/wetting of the substrate surface). Subsequently structural adhesive is applied onto thermally debondable non-reactive heat activated adhesive and a second substrate is applied top of structural adhesive and therefore, a bonded structure according to the present invention is formed. The bonded structure stays intact during the lifetime of the bonded components. When needed, either for a repair, or a demolition at the end of the lifetime of the bonded components thermal debonding is induced by applying heat and subsequently debonding of the thermally debondable non-reactive heat activated adhesive occurs and the bonded components can be separated without damaging them.

### Examples

The examples described hereunder exemplify the properties of the compositions according to the embodiments of the present invention. Unless otherwise indicated, all parts and percentages in following examples, as well as throughout the description, are parts by weight or percentages by weight respectively. The following examples are included for purposes of illustration so that the disclosure may be more readily understood and are in no way to be intended to limit the scope of the disclosure unless otherwise specifically indicated.

| *Chemical* | *Supplier* |
|---|---|
| Two-component epoxide resin TEROSON EP 5065 | Henkel AG & Co. KGaA |
| TCA-MO1138-V131 | Henkel AG & Co. KGaA |
| Technomelt PW 866 | Henkel AG & Co. KGaA |
| Technomelt AS 8383 | Henkel AG & Co. KGaA |
| Dynacoll S 1402 | Evonik |
| Dynacoll 7130 | Evonik |
| Dynacoll 7330 | Evonik |
| Dynacoll AC 1620 | Evonik |
| Dynacoll AC 1630 | Evonik |
| Lupranol 1200 | BASF |
| Caradol ED56-300 | Shell |
| Bonderite M-NT 1455 W Wipes | Henkel |
| Aluminum substrates (100mm x 25 mm x 2 mm) | Rocholl |
| Glass pearls (1mm) | Marienfeld |

### Example 1

Thermally debondable, non-reactive heat activated adhesive composition according to the present invention and comparative examples were prepared in accordance with Table 1 herein below:

**Table 1**

| | Example 1 | Comp. example 1 | Comp. example 2 | Comp. example 3 | Comp. example 4 |
|---|---|---|---|---|---|
| Dynacoll AC 1620 | 50 | 50 | 50 | 50 | |
| Dynacoll AC 1630 | | | | | |
| Dynacoll AC 1920 | | | | | 50 |
| Dynacoll S 1402 | | 40 | 40 | | |
| Dynacoll 7330 | 40 | | | 10 | 40 |
| Dynacoll 7130 | | | | 30 | |
| Lupranol 1200 | | | 10 | | |
| Caradol ED56-300 | 10 | 10 | | 10 | 10 |

Compositions were prepared by mixing all components together, by melting PPG and polyacrylate first and subsequently adding polyester and mixing.

The bonded substrates were pretreated before formation of the bonded structure. The substrates were rubbed with a piece of paper socked in iPrOH and let dry. For the Al3003 substrates on the adhesive side an additional wiping step was performed using Bonderite M-NT 1455 W Wipes to improve the adhesion of the epoxy-based adhesives.

### Sample preparation for lap shear measurements

The bonded structures were prepared via following process: prior to joining the substrates, the thermally debondable, non-reactive heat activated adhesive composition according to the formulas listed in table 1 was melted and bar-coated with a thickness of 100 µm, onto a silicon foil. After cooling to room temperature, the film was directly transferred on one isopropanol-treated and pre-heated substrate per sample, followed by a post-melting process at 150°C for 10 min. The layer of thermally debondable, non-reactive heat activated adhesive composition was overlayered with an TEROSON EP 5065 from Henkel AG & Co. AG KGaA to give a joint surface of 25 mm x 1 mm, whereas the bondline thickness was controlled by adding glass pearls of 1 mm in diameter to the adhesive layer. The second substrate, which was pre-treated with isopropanol and Bonderite wipes was placed on top, excess adhesive was removed, and the bonded structures were thermally settled in an oven for two hours at 60°C.

The same process was repeated for each composition listed in table 1.

### Tensile Shear Strength between 23°C and 100°C on aluminium

The Tensile Lap Shear Strength of TEROSON EP 5065 combined with thermally debondable, non-reactive heat activated adhesive composition according to the present invention and comparative examples on aluminium was measured at temperatures between 23°C and 100°C. With regards to battery-related applications, a sufficient strength at 23°C and 60°C is crucial, while at the same time, a significant drop of strength at temperatures between 80°C and 100°C is essential for efficient detachment of jointed parts. Therefore, different adhesive compositions were tested to evaluate their overall performance based on polyesters, polyacrylates, and polypropylene glycol variations, as well as polyester combinations.

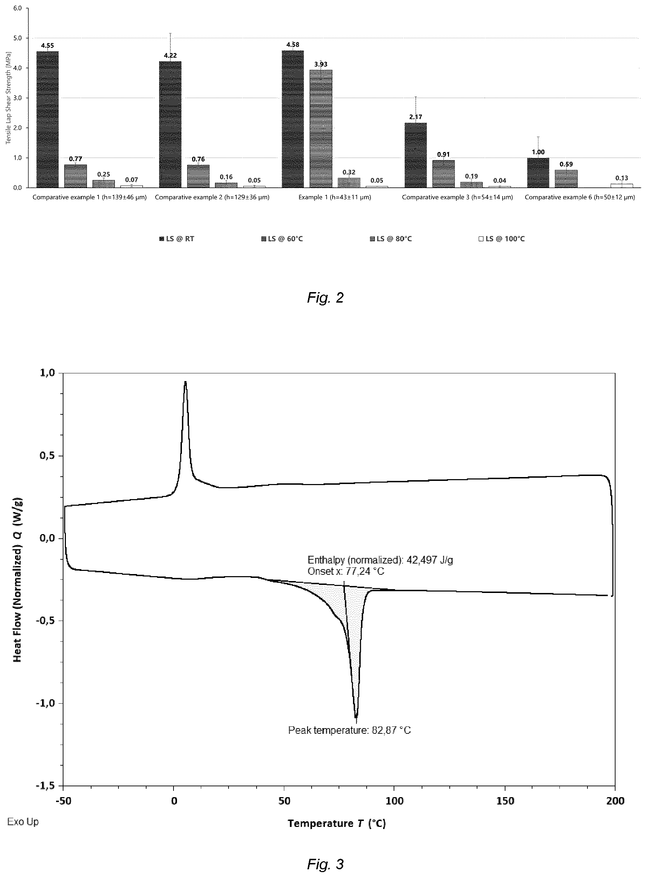

Figure 2 illustrates the results. Example 1, the composition according to the present invention meets the above criteria. Here, due to softening of the adhesive layer, initial strength slightly drops from 4.6 ± 0.3 MPa to 3.9 ± 0.3 MPa, when heated to 60°C. When the melting point of the example 1 (77°C; according to DSC measurements illustrated in figure 3) is exceeded, a dramatic drop of strength is observed with increasing temperature (-93% (80°C) and -99% (100°C)).

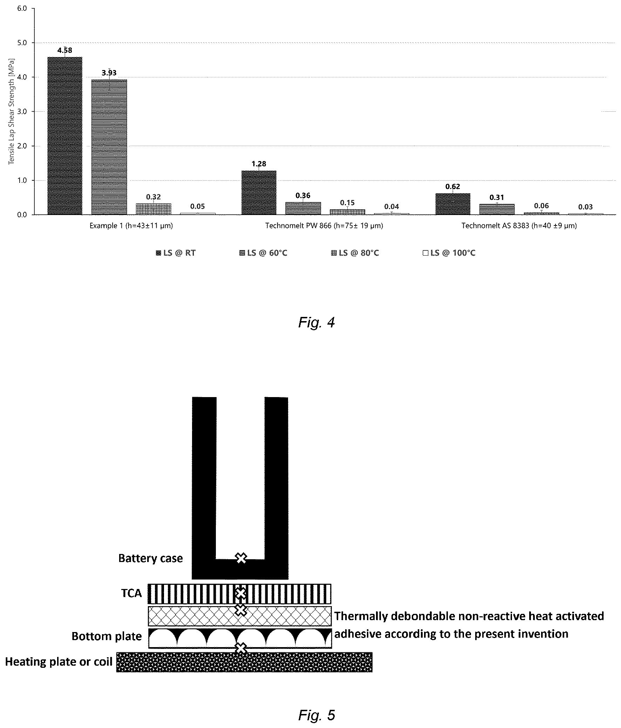

Beside screening different polyacrylate/polyester formulations, the overall performance of example 1 was additionally compared to commercially available olefine- and EVA-based hotmelts - Technomelt PW 866 and Technomelt AS 8383 both available from Henkel AG & Co. KGaA. Their overall lack of sufficient strength at room temperature and 60°C further points out Example 1 as a highly suitable non-reactive debonding system for intended application. These tensile lap shear strength results are illustrated in figure 4.

### Evaluation of the temperature propagation in a battery cell during debonding as main application

One major challenge of battery debonding *via* thermal activation constitutes the fact that battery cells under no circumstances should reach temperatures above 60°C during lifetime and disassembly process. On this account, the heat transfer from the debonding layer towards an empty battery cell was evaluated and continuously monitored.

Figure 5 illustrates the battery cell setup applied to evaluate the heat transfer through the layers towards the cell during the debonding process. The bottom aluminium plate is heated by an inductive coil or a heating plate. The transfer of the heat through the debonding layer and epoxy-based TCA towards the battery case is continuously monitored by integrated thermocouples (positions marked by crosses).

The tests were performed using two different heating methods - *via* an inductive device and a heating plate - to point out the overall application flexibility with regards to thermal triggering of this hotmelt debonding approach. Both experiments were performed based on a thin debonding layer of approximately 50 µm, overlayered with an epoxy-based thermally conductive adhesive (TCA).

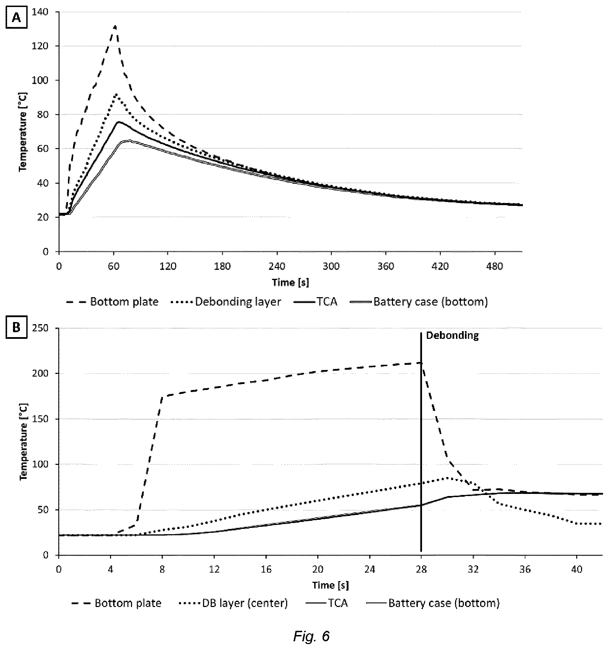

Figure 6 illustrates recorded temperature curves of the different components. (A) Inductive heating of the setup to assess the thermal heat propagation throughout the different layers. (B) Debonding of the battery cell after 50 s heating on a pre-heated steel plate. By the term debonding layer is meant a layer of composition according to the present invention or comparative example.

First the test setup was heated for 60s with an inductive coil to estimate the heat transfer throughout the debonding and TCA layer towards the cell. It is worth mentioning from figure6A that even though the debonding layer rapidly exceeds the melting point of example 1 (88°C; Tm=77°C), the battery case stays at 58°C. However, due to the delayed heat transfer through the layered system, the bottom of the case slightly exceeds 60°C after 60s.

In a second approach, the same setup was tested on a pre-heated hot plate (Figure 6B). As the dummy is directly sat on a pre-heated plate, the debonding layer rapidly reaches its melting point and the debonding of the battery case can be easily performed after 28s before critical temperatures above 60°C was reached.

## Claims

1. A thermally debondable, non-reactive heat activated adhesive composition comprising
a) a copolymer of methyl methacrylate and n-butyl methacrylate having a molecular weight from 30000 to 36500 g/mol;
b) a hydroxyl group terminated copolyester having a molecular weight from 3250 to 3750g/mol;
c) a polypropylene glycol having a molecular weight from 1500 to 2500g/mol,
wherein the molecular weight is measured with gel permeation chromatography (GPC) using polystyrene calibration standards, such as is done according to ASTM 3536.

2. The thermally debondable, non-reactive heat activated adhesive composition according to claim 1, wherein the copolymer of methyl methacrylate and n-butyl methacrylate has a molecular weight about 35000 g/mol, wherein the molecular weight is measured with gel permeation chromatography (GPC) using polystyrene calibration standards, such as is done according to ASTM 3536.

3. The thermally debondable, non-reactive heat activated adhesive composition according to claim 1 or 2, wherein the hydroxyl group terminated copolyester has a molecular weight about 3500g/mol, wherein the molecular weight is measured with gel permeation chromatography (GPC) using polystyrene calibration standards, such as is done according to ASTM 3536.

4. The thermally debondable, non-reactive heat activated adhesive composition according to any of claims 1 to 3, wherein the polypropylene glycol has a molecular weight about 2000g/mol, wherein the molecular weight is measured with gel permeation chromatography (GPC) using polystyrene calibration standards, such as is done according to ASTM 3536.

5. The thermally debondable, non-reactive heat activated adhesive composition according to any of claims 1 to 4, wherein the copolymer of methyl methacrylate and n-butyl methacrylate is present in an amount of from 45 to 55% by weight of the total weight of the composition, preferably from 47 to 53%, more preferably from 48 to 52% and even more preferably the copolymer of methyl methacrylate and n-butyl methacrylate is present in an amount of about 50%.

6. The thermally debondable, non-reactive heat activated adhesive composition according to any of claims 1 to 5, wherein the hydroxyl group terminated copolyester is present in an amount of from 35 to 45% by weight of the total weight of the composition, preferably from 37 to 43%, more preferably from 38 to 42% and even more preferably the hydroxyl group terminated copolyester is present in an amount of about 40%.

7. The thermally debondable, non-reactive heat activated adhesive composition according to any of claims 1 to 6, wherein the polypropylene glycol is present in an amount of from 5 to 15% by weight of the total weight of the composition, preferably from 7 to 13%, more preferably from 8 to 12% and even more preferably the polypropylene glycol is present in an amount of about 10%.

8. Thermally settled thermally debondable, non-reactive heat activated adhesive composition according to any of claims 1 to 7.

9. Use of thermally debondable, non-reactive heat activated adhesive composition according to any of claims 1 to 7 or thermally settled product according to claim 8 in a bonded structure.

10. A bonded structure comprising:
a first substrate;
a second substrate;
a thermally debondable, non-reactive heat activated adhesive composition layer according to any one of claims 1 to 7 or thermally settled product layer according to claim 8; and
an adhesive layer,
wherein the thermally debondable, non-reactive heat activated adhesive composition is disposed on a surface of the first substrate and/or on a surface of the second substrate and wherein the adhesive layer is placed on top of the thermally debondable, non-reactive heat activated adhesive composition layer.

11. The bonded structure according to claim 10, wherein the adhesive layer is preferably formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

12. A method of debonding said bonded structure according to claim 10 or 11, the method comprising the steps of:
i) applying a heat; and,
ii) debonding the surfaces.

13. The method according to claim 12, wherein the temperature applied in step i) is from 60 to 100°C.

14. The method according to claim 12 or 13, wherein the temperature applied in step i) is applied for a duration of from 2 minutes second to 60 minutes.
